# EUROPÄISCHE PATENTSCHRIFT

(11) **EP 1 030 111 B1**
(45) Veröffentlichungstag und Bekanntmachung des Hinweises auf die Patenterteilung: **23.07.2003**
(21) Anmeldenummer: 00102975.0
(22) Anmeldetag: 14.02.2000
(51) Int. Cl.: F23Q 7/00

(54) **Stabglühkerze**
Glow pin plug
Bougie à tige incandescente

(30) Priorität: 19.02.1999 DE 19907229
(43) Veröffentlichungstag der Anmeldung: 23.08.2000
(73) Patentinhaber: Beru AG, 71636 Ludwigsburg (DE)
(72) Erfinder: Eller, Martin, 71642 Ludwigsburg (DE); Allgaier, Martin, 71634 Ludwigsburg (DE)
(74) Vertreter: Wilhelms, Rolf E., Dr.

(56) Entgegenhaltungen:
- EP-A- 0 413 147
- DE-A- 3 413 850
- US-A- 4 476 378
- PATENT ABSTRACTS OF JAPAN vol. 007, no. 071 (M-202), 24. März 1983 (1983-03-24) & JP 58 000021 A (NIPPON TOKUSHU TOGYO KK), 5. Januar 1983 (1983-01-05)

## Beschreibung

Gegenstand der Erfindung ist eine Stabglühkerze nach dem Oberbegriff des Anspruchs 1. Eine derartige Stabglühkerze ist aus der EP-A-0 413 147 bekannt.

Derartige Stabglühkerzen weisen ein Glührohr auf, in dem Heizwendel(n) und ggf. Regelwendel(n) in Reihe miteinander verbunden angeordnet sind, die Wendel(n) im anschlußseitigen Bereich mit einem Anschlußpol und in der Glührohrspitze mit dem Glührohr verbunden sind. Üblicherweise sind die Wendeln innerhalb des Glührohres in einem elektrisch isolierendem wärmeleitfähigen Material eingebettet. Im Bereich der Glührohrspitze weist diese zunächst eine Öffnung auf, in der das brennraumseitige Wendelende unter Ausbildung einer Schweißlinse mit dem Glührohr verschweißt wird. Durch diese Schweißlinse entsteht eine starke Materialanhäufung, die die Vorglühzeit der Kerze negativ beeinflußt. Ebenfalls nachteilig ist die hohe Schweißenergie die zum Verschweißen von Glührohr und Heizwendel aufzubringen ist. Insbesondere bei langen Stabglühkerzen und/oder bei Heizwendeln mit dünnen Drähten stellt die Zentrierung der Heizwendel im Bereich der Schweißlinse ein großes Problem dar, wobei es nicht selten zu fehlerhaften Stabglühkerzen kommt, wenn die Heizwendel nicht exakt zentriert ist.

Der Erfindung liegt die Aufgabe zugrunde, eine Stabglühkerze zur Verfügung zu stellen, deren Wendeln sehr genau zentriert sind, und bei deren Herstellung Ausschuß durch mangelnde Zentrierung der Wendeln wesentlich verringert wird.

Die erfindungsgemäße Aufgabe wird durch die Stabglühkerze gemäß Anspruch 1 gelöst. Weitere vorteilhafte Ausgestaltungen der Erfindung ergeben sich aus den nachfolgenden Ansprüchen 2 bis 8.

Die erfindungsgemäße Stabglühkerze weist durch Verschweißung der Glühspitze mit der Heizwendel mit dem erfindungsgemäßen Stabilisatorstab geringere Materialanhäufung auf als bei der herkömmlicher Verschweißung; darüberhinaus ermöglicht der neue Stabilisatorstab der erfindungsgemäßen Stabglühkerze kleinräumige lokalisierte Schweißtechniken wie beispielsweise die Laserschweißtechnik. So ergeben sich bei Verschweißung der Heizwendel der erfindungsgemäßen Stabglühkerze mit Stabilisatorstab genauere Widerstandswerte als bei der herkömmlichen Verschweißung mit resultierender undefinierter Schweißlinse.

Bei der Montage der erfindungsgemäßen Stabglühkerze mit Stabilisatorstab wird die Heizwendel vorteilhaft ruhig gehalten und genau zentriert; die bei einer besonderen Ausführungsform vorgesehene Bruchstelle des Stabilisatorstabes führt zu dessen sicherer Auftrennung bei der Verdichtung des Heizstabes durch beispielsweise Rundhämmern und dadurch zur Vermeidung von Kurzschlüssen. Darüberhinaus führt die Verwendung des Stabilisatorstabes in der erfindungsgemäßen Stabglühkerze wegen der geringeren Materialanhäufung an der Glührohrspitze bei Verschweißung und wegen der exakten Zentrierung der Heizwendel im Glührohr zu der erwünschten gleichmäßigen Wärmeabfuhr.

In den folgenden Figuren 1 bis 10 werden bevorzugte Ausführungsformen der erfindungsgemäßen Stabglühkerze beschrieben.
Figuren 1 ist ein schematischer Längsschnitt durch ein brennraumseitig offenes Glührohr mit Schweißansatz aus dem Stand der Technik;
Figur 2 ist ein schematischer Längsschnit durch das Glührohr gemäß Figuren 1 mit innenliegender Heizwendel und Anschlußpol mit Schweißlinse in der Glührohrspitze;
Figur 3 ist ein schematischer Längsschnitt durch ein Glührohr ohne Schweißansatz;
Figur 4 ist ein schematischer Längsschnitt durch eine Glührohrspitze mit Wendel und erfindungsgemäßem Stabilisatorstab;
Figur 5 ist ein schematischer Querschnitt durch die Glührohrspitze gemäß Figur 4 nach dem Verschweißen;
Figur 6 ist ein schematischer Querschnitt durch die Glührohrspitze mit einem erfindungsgemäßen Stabilisatorstab mit Kopf;
Figur 7 ist der schematische Querschnitt durch die Glührohrspitze nach Figur 6 nach dem Verschweißen;
Figur 8 zeigt schematisch die Verschweißung der Heizwendel mit dem Stabilisatorkopf;
Figur 9 gibt schematisch den Zusammenbau von Stabilisatorstab, Wendel und Anschlußpol wieder;
Figur 10 ist die Seitenansicht eines Stabilisatorstabes mit Kopf und Sollbruchstelle einer erfindungsgemäßen Stabglühkerze.

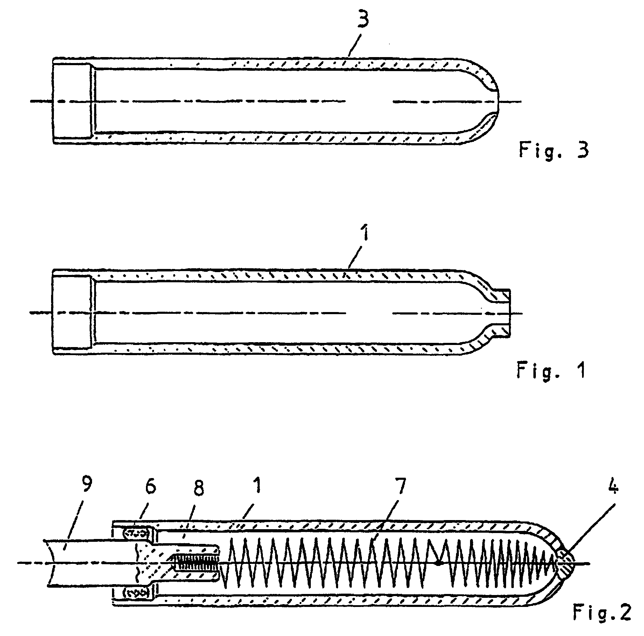

Gemäß der Figur 2 weist eine herkömmliche Stabglühkerze ein Glührohr 1 auf, das gemäß Figur 1 mit Schweißzusatz im Bereich einer Öffnung in der Glührohrspitze versehen ist.

In dem Glührohr sind eine oder mehrere Heiz- und/oder Regelwendeln 7 angeordnet, wobei der Wendelendbereich in brennraumseitiger Richtung in der Öffnung unter Ausbildung einer Schweißlinse 4 zur Fixierung und Kontaktierung mit dem Glührohr befestigt ist, während der anschlußseitige Bereich in einem Anschlußpol 9 kontaktierend fixiert ist, wobei der Anschlußpol 9 teilweise in den Innenraum des Glührohrs 1 hineinragt; letzteres ist mit einer Dichtung 6 gegen Eindringen von Feuchte und Luft verschlossen, wobei innerhalb des Glührohres Füllmaterial 8 eingebracht ist, wobei die Wendeln 7 in dem Füllmaterial eingebettet sind, das üblicherweise elektrisch isolierend, jedoch gut wärmeleitend ist. Im anschlußseitigen Bereich wird das Wendelende in einer Bohrung des Innenpols 9 durch Verstemmen festgelegt.

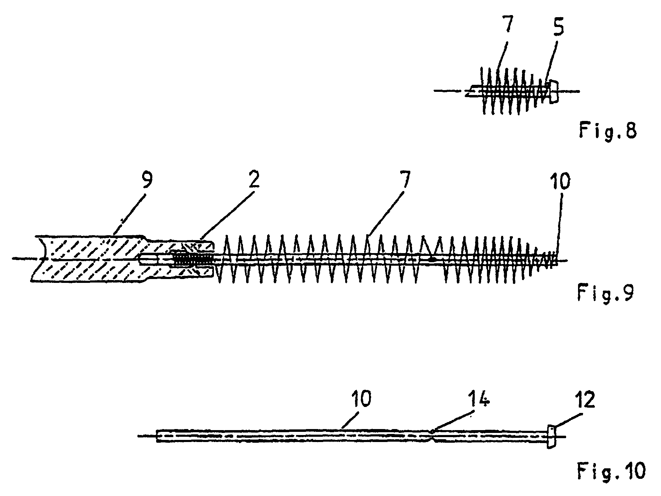

Die erfindungsgemäße Stabglühkerze weist, wie in Figur 9 gezeigt, einen Stabilisatorstab 10 auf, der vom Anschlußpol 9 mittig durch die Windungen der Wendeln 7 sich erstreckt.

In Figur 10 ist eine besonders bevorzugte Ausführungsform eines erfindungsgemäßen Stabilisatorstabes 10 wiedergegeben, wobei dieser einen Kopf 12 und eine Sollbruchstelle 14 aufweist, wobei letztere im weiteren Verlauf der Herstellung der Stabglühkerze, insbesondere bei dem anschließenden Verdichten des Heizstabes durch Rundhämmern aufbricht. Bei dieser Ausführungsform ist das brennraumseitige Wendelende, wie in Figur 8 gezeigt, punktförmig 5 an dem Kopf 12 angeschweißt.

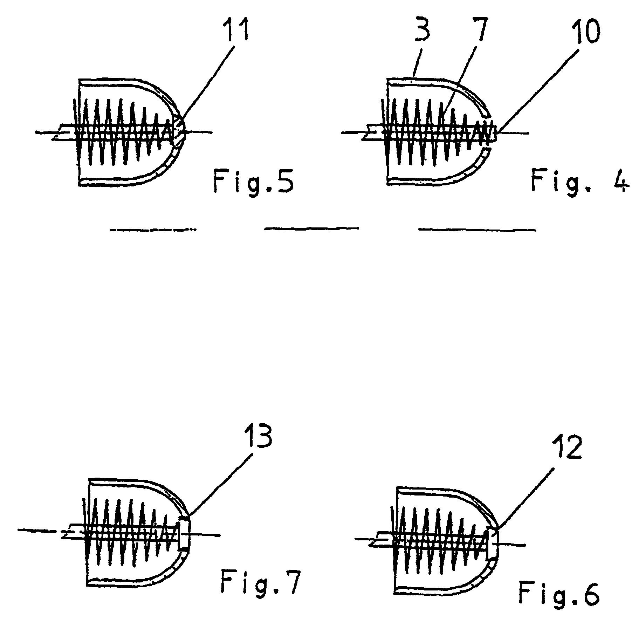

Die Figuren 4 und 5 zeigen die Durchführung bzw. Einführung des brennraumseitigen Stabilisatorstabendes mit anliegendem Wendelendbereich in/durch die Öffnung der Glührohrspitze und dessen Verschweißung, die zu der definierten Schweißlinse 11 führt.

Die Figuren 6 und 7 zeigen das gleiche unter Verwendung des Stabilisators 10 mit Kopf 12; hierbei ist eine trichterförmige Ausbildung der Öffnung in der Glührohrspitze bei gleichzeitiger stopfenförmiger Ausbildung des Isolatorstabkopfes 12 von Vorteil. Die Verschweißung 13 des Kopfes 12 in der Öffnung erfolgt bevorzugt durch Laserschweißen.

Bei allen Ausführungsformen werden auch im anschlußseitigen Bereich Montagevorteile und verbesserte elektrische Kontaktierung erzielt, wenn das anschlußseitige Ende des Stabilisators 10, mit dem anschlußseitigen Wendelende verbunden oder eng umwickelt in einer Bohrung im Anschlußpol 9 verschweißt wird; hierbei kann demnach entweder nur das anschlußseitige Ende der Wendel oder Wendelende zusammen mit dem Stabilisatorstabende mit dem Anschlußpol 9 verschweißt werden.

Besonders bevorzugt ist es insbesondere, wenn man die Verschweißung der Regelwendel 7 mit oder ohne Endabschnitt des Stabilisators 10 im Anschlußpol 9 als Laserverschweißung und hierbei insbesondere ohne zusätzliche Schweißzusätze durchführt; hierbei kann die Wandstärke der Innenpolbohrung entsprechend gering ausgelegt werden.

## Patentansprüche

1. Stabglühkerze mit einem Glührohr (3), mindestens einer innenliegenden Heizwendel (7) und gegebenenfalls Regelwendel (7) und in das Glührohr (3) führendem Anschlusspol (9), wobei die Wendeln (7) mit Anschlusspol (9) und Glührohrspitze verbunden sind, und ein Stabilisatorstab (10) vorgesehen ist, der sich in einer Montagestufe vom Anschlusspol (9) bis zur Glührohrspitze erstreckt und im Wesentlichen mittig durch die Wendeln (7) verlaufend angeordnet ist, **dadurch gekennzeichnet, dass** der Endbereich des Stabilisatorstabes (10) mit der Spitze des Glührohrs (3) verschweisst ist.

2. Stabglühkerze nach Anspruch 1, **dadurch gekennzeichnet, dass** das brennraumseitige Ende der Wendeln (7) fest an dem brennraumseitigen Endbereich des Stabilisatorstabes (10) befestigt ist.

3. Stabglühkerze nach Anspruch 1 oder 2, **dadurch gekennzeichnet, dass** der Stabilisatorstab (10) brennraumseitig einen Kopf (12) aufweist, der eine Öffnung in der brennraumseitigen Spitze des Glührohres (3) verschließt.

4. Stabglühkerze nach Anspruch 3, **dadurch gekennzeichnet, dass** das brennraumseitige Ende der Wendeln (7) mit dem Kopf (12) des Stabilisatorstabes (10) verschweisst ist.

5. Stabglühkerze nach Anspruch 4, **dadurch gekennzeichnet, dass** die Verschweissung der Wendeln (7) mit dem Kopf (12) des Stabilisatorstabes (10) durch Laserschweissen erfolgt ist.

6. Stabglühkerze nach einem der vorhergehenden Ansprüche, **dadurch gekennzeichnet, dass** der anschlussseitige Endbereich der Wendeln (7) mit dem benachbarten Ende des Anschlusspoles (9) verschweisst ist.

7. Stabglühkerze nach einem der vorhergehenden Ansprüche, **dadurch gekennzeichnet, dass** die anschlussseitigen Endbereiche des Stabilisatorstabes (10) und der Wendeln (7) fest miteinander verbunden an der Stirnseite oder in einer Bohrung in der Stirnseite des Anschlusspoles (9) verschweisst sind.

8. Stabglühkerze nach Anspruch 7, **dadurch gekennzeichnet, dass** der Stabilisatorstab (10) eine Sollbruchstelle (14) zum Auftrennen des Stabilisatorstabes (10) aufweist, an der sich der Stabilisatorstab (10) beim Verdichten des Glührohres (3) durch Rundhämmern aufteilt.

## Claims

1. Pin-type glow plug having a glow tube (3), at least one heating coil (7) and optionally control coil (7) on the inside and a terminal (9) leading into the glow tube (3), the coils (7) being connected to the terminal (9) and the glow tube tip, and a stabiliser rod (10) being provided which extends in an assembly stage from the terminal (9) to the glow tube tip and is arranged to run substantially centrally through the coils (7), **characterised in that** the end region of the stabiliser rod (10) is welded to the tip of the glow tube (3).

2. Pin-type glow plug according to claim 1, **characterised in that** the combustion-chamber-side end of the coils (7) is fixedly attached to the combustion-chamber-side end region of the stabiliser rod (10).

3. Pin-type glow plug according to claim 1 or 2, **characterised in that** the stabiliser rod (10) has a head (12) on the combustion chamber side, which head (12) closes an opening in the combustion-chamber-side tip of the glow tube (3).

4. Pin-type glow plug according to claim 3, **characterised in that** the combustion-chamber-side end of the coils (7) is welded to the head (12) of the stabiliser rod (10).

5. Pin-type glow plug according to claim 4, **characterised in that** the welding of the coils (7) to the head (12) of the stabiliser rod (10) has been performed by laser welding.

6. Pin-type glow plug according to any one of the preceding claims, **characterised in that** the connection-side end region of the coils (7) is welded to the adjacent end of the terminal (9).

7. Pin-type glow plug according to any one of the preceding claims, **characterised in that** the connection-side end regions of the stabiliser rod (10) and the coils (7), fixedly connected to each other, are welded to the end face or in a bore in the end face of the terminal (9).

8. Pin-type glow plug according to claim 7, **characterised in that** the stabiliser rod (10) has a predetermined breaking point (14) for separation of the stabiliser rod (10), at which breaking point the stabiliser rod (10) parts upon swaging of the glow tube (3).

## Revendications

1. Bougie à tige incandescente avec un tube incandescent (3), au moins une spirale de filament (7), et le cas échéant une spirale de réglage (7), se trouvant à l'intérieur, et un pôle de raccordement menant au tube incandescent (3), moyennant quoi les spirales (7) sont raccordées avec le pôle de raccordement et la pointe du tube incandescent, tandis qu'une barre de stabilisateur (10) est prévue, qui s'étend à un échelon de montage du pôle de raccordement (9) jusqu'à la pointe du tube incandescent et qui est installée sensiblement au milieu, en passant à travers les spirales (7), **caractérisée en ce que** la zone terminale de la barre de stabilisateur (10) est soudée avec la pointe du tube incandescent (3).

2. Bougie à tige incandescente selon la revendication 1, **caractérisée en ce que** l'extrémité du côté brûleur des spirales (7) est fixée solidement à la zone terminale du côté brûleur de la barre de stabilisateur (10).

3. Bougie à tige incandescente selon la revendication 1 ou 2, **caractérisée en ce que** la barre de stabilisateur (10) comprend une tête (12) du côté du brûleur, qui ferme une ouverture dans la pointe du côté du brûleur du tube incandescent (3).

4. Bougie à tige incandescente selon la revendication 3, **caractérisée en ce que** l'extrémité du côté du brûleur des spirales (7) est soudée avec la tête (12) de la barre de stabilisateur (10).

5. Bougie à tige incandescente selon la revendication 4, **caractérisée en ce que** la soudure des spirales (7) avec la tête (12) de la barre de stabilisateur (10) s'effectue par soudure laser.

6. Bougie à tige incandescente selon l'une quelconque des revendications précédentes, **caractérisée en ce que** la zone terminale du côté raccordement des spirales (7) est soudée avec l'extrémités voisine du pôle de raccordement.

7. Bougie à tige incandescente selon l'une quelconque des revendications précédentes, **caractérisée en ce que** les zones terminales du côté du raccordement de la barre de stabilisateur (10) et les spirales (7) sont solidement reliées entre elles sur le côté frontal ou sont soudées dans un forage dans le côté frontal du pôle de raccordement (9).

8. Bougie à tige incandescente selon la revendication 7, **caractérisée en ce que** la barre de stabilisateur (10) comprend un point destiné à la rupture (14) pour défaire la barre de stabilisateur (10), où la barre de stabilisateur (10) se partage lors de la compression du tube incandescent (3) par martelage.
